Europäisches Patentamt

European Patent Office

Office européen des brevets

(19)

(11) Publication number: **0 080 313**
**B1**

(12) **EUROPEAN PATENT SPECIFICATION**

(45) Date of publication of patent specification: **26.02.86**

(51) Int. Cl.⁴: **A 47 J 39/02,** F 25 D 3/12,
**A 47 B 31/02**

(21) Application number: **82306064.5**

(22) Date of filing: **15.11.82**

(54) **Apparatus for chilling food on a plurality of food trays.**

(30) Priority: **16.11.81 US 321852**
**01.06.82 US 383423**

(43) Date of publication of application:
**01.06.83 Bulletin 83/22**

(45) Publication of the grant of the patent:
**26.02.86 Bulletin 86/09**

(84) Designated Contracting States:
**DE FR GB IT**

(56) References cited:
**EP-A-0 046 414**
**DE-A-2 456 064**
**FR-A- 844 112**
**FR-A-2 416 434**
**GB-A-1 425 717**
**GB-A-2 054 115**
**US-A-4 005 745**

(73) Proprietor: **PTC Aerospace Inc.**
**Bantam Connecticut 06750 (US)**

(72) Inventor: **Dodd, Malcolm Joseph**
**Route 2 Dutton Heights**
**Litchfield Connecticut (US)**
Inventor: **Lamb, Richard C.**
**386 East Street**
**Southington Connecticut (US)**

(74) Representative: **Newby, John Ross et al**
**J.Y. & G.W. Johnson Furnival House 14/18 High**
**Holborn**
**London WC1V 6DE (GB)**

Courier Press, Leamington Spa, England.

## Description

The invention relates to apparatus of the general type used by airlines and hospitals to house loaded meal trays until they are ready to be served.

More particularly, the invention relates to a food service cart in which food on food trays is kept in a chilled condition until the trays are removed from the cart. The majority of known food service carts for holding trays of food, use one cart or a portion thereof for holding trays and the food thereon in a chilled atmosphere and another for holding containers for the hot portion of the meal. The hot meal containers are commonly fully cooked and then merely kept warm in the cart, or else they are partially cooked, kept warm and then heated to the required temperature shortly before serving. An example of a system wherein a portion of a cart is chilled while another portion thereof is heated is disclosed in US—A—3,517,899. Such systems necessitate the use of a significant amount of labour and space to assemble the hot items to the tray containing the cold items. Furthermore, in a hospital, where different patients require different diets, such a system presents a risk of the wrong hot item being placed on a patient's tray. Other systems merely thermally insulate the trays, so that with the passage of any significant amount of time, the hot food items will cool and the cold food items will get warm.

In order to overcome the aforementioned problems and to greatly improve the palatability of the hot food items, there have been a number of systems proposed for keeping all of the food on a tray chilled in a refrigerated atmosphere and then selectively heating the bottom surfaces of the containers for the hot items just before serving. Insulating covers on the hot containers help to prevent a loss of heat from the food therein. One such system, which has apertures in the tray bottom through which the hot dishes project into contact with a heater element, is disclosed in US—A—4,005,745. This system utilises an enclosure which may contain dry ice and a blower positioned on the top of a cart and having short inlet and exhaust conduits extending downwardly through the top wall of the cart to permit chilled air to circulate within the interior of the cart. Other systems in which the hot containers do not project through the tray bottom are shown in our US Reissue Patent Re. 30,623 and in copending EP—A—0046414. In these systems, which are especially suited for use in aircraft, a heater shelf carried by the cart is slid under a restrained hot dish as the tray is located into the cart. Cooling of the interior of the cart utilises apertures in an end thereof which are placed in communication with external refrigeration equipment. However, it is broadly noted that other cooling means, including dry ice, could be used as an external source of cool air, or could be placed in a cart.

With weight and space both being extremely critical in an aircraft, it is desirable to eliminate the need for separate storage facilities for the hot food items of a meal. However, where chilling is provided by mechanical refrigeration equipment mounted in the aircraft, it is usual to provide a separate, relatively heavy cooling unit for each set of four or five carts which the aircraft can accommodate. These cooling units are not only relatively expensive, but they are quite heavy and each of them adds, to the tare weight of the aircraft, even though there may be only a few full food service carts on the aircraft on many of its flights. The mere placement of dry ice within a cart has been found to be ineffective to provide uniform chilling of the closely stacked trays and to overcome the heat loss from the hot food containers. The latter loss is not great when previously chilled containers are rapidly heated to serving temperature, but obviously all the heat released during the "hold warm" operation following the bringing of the hot containers to their serving temperature must be extracted by the chilling medium, if the chilled food items are to be maintained at an acceptably low temperature. A top-mounted dry ice cooling unit of the type shown in US—A—4,005,745 would appear to cause a considerable loss of storage area in the cart, since the cart would have to be much lower to fit in its usual under-counter storage location in an aircraft galley. Also, the inlet and outlet flow conduits which are depicted would appear to be incapable of providing adequate uniform cooling of all of the trays in an elongate, narrow aircraft food service cart.

What constitutes the invention is defined in the following claims 1 and 10.

The precharacterizing features of the following claim 1 can be taken from GB—A—2,054,115 which discloses a removable dry ice bunker in the upper part of a food service cart which bunker has a grooved base on which the dry ice rests, the grooved base being provided to enhance the contact area between the dry ice and the bunker base and not to permit a force circulation of cold air below the pieces of dry ice as the applicant herein proposes.

The present invention seeks to provide an improved, self-contained, chilling system for a food service cart which supports pieces of dry ice in a removable tray-like bunker for maximum heat transfer relative to a stream of circulating air moving through the cart. Desirably the bunker can be loaded from either end of the cart, but only in the proper orientation.

The invention provides a chilling system which is very light in weight and compact, and yet quite capable of providing satisfactory chilling of a large number of closely stacked trays for substantial periods of time, even when certain items on the trays are being heated, and even when delays in serving take place.

The invention permits an aircraft food service cart to be constructed narrow enough so as to be readily movable through the aisles of an aircraft.

The bunker can readily be made to fit within the space of one shelf in a cart of the type disclosed in EP—A—0046414. The blower and curved mounting and inlet guide plates may be affixed to the inside of the cart, located above the bunker adjacent its upstream end. The tray-like bunker into which dry ice or other cooling material is adapted to be placed is then slid like a drawer into the top shelf of the cart. The bunker is preferably formed of thermoformed plastics material with thermal insulation in its bottom and side walls. Since the cooling material is preferably dry ice which merely changes from the solid to the gaseous phase, or a sealed container of a chemical which provides greater cooling capacity than ordinary ice, the ends of the bunker can be open. Thus, one end can have one or more apertures to mate with the exhaust structure of one or more small diameter fans or blowers, while the other end preferably terminates in a curved surface which directs the chilled air downwardly.

The bottom inside surface of the bunker can be corrugated to exhibit a cross-section transverse to the air flow direction which provides a plurality of spaced-apart dry ice supporting surfaces and intermediate spaced apart channels under the dry ice. The channels permit air to flow under the solid dry ice pieces and force the heavier than air, cold $CO_2$ gas which is emitted from under the dry ice to be rapidly carried out of the bunker and down the inside of the door of the cart at its downstream end.

Where dry ice is used, and the bunker has a flat interior bottom surface that prevents air from contacting the entire bottom surface of the dry ice pieces, it is preferable to use several thin layers of broken-up pieces, with the layers being separated by thin perforated horizontal spacer plates to maximize heat transfer.

However, a single layer of 12 mm thick pieces of dry ice has been found to provide cooling at a rate at least as great as achieved by two layers of dry ice separated by a perforated retaining shelf, where the bottom interior surface of the bunker is corrugated as aforementioned. Obviously by eliminating the need for a certain amount of dry ice there are savings introduced both in the cost of the dry ice and in its weight.

The vertical air flow path adjacent each of the end walls of the cart may be achieved by providing cooperating detents on the trays and shelves, but it is preferable to provide spacer means on each end wall to prevent the trays from getting closer than about 12 mm from the vertical end wall. If the spacer means takes the form of an insulated blocking pad which fills the space between the ends of the trays and the cart end wall in the region adjacent hot food-containing portions of the trays, the chilled air will tend to be channeled into a path over the cold items on the trays. Thus, the air circulation around the hot containers will be minimized and the cooling load of the apparatus will be reduced.

The blower (e.g. a fan) can be mounted in the cart so that an opening in an end wall of the bunker is adapted to abut the blower. This particular arrangement, although quite functional, permits the bunker to be installed from only one end of the cart, whereas airlines would probably prefer to be able to install it from either end, since they are accustomed to loading food trays from either end. The position of the blower in horizontal alignment with the removable bunker causes it to be exposed to possible damage from the careless use of high pressure steam or hot water hoses used to clean the carts after every use.

This problem is solved where the cart is of the type in which the food containers which are to be served hot are heated while on the passenger meal trays, by the blower being located at an angle in the top wall of the cart. Where the cart is of the split type having a first section for the trays containing the entire meal except for the entree and a second section for the hot entree casseroles, the blower for the bunker is preferably located above the first section and the first and second sections can then be insulated from each other.

The invention will now be further described, by way of example, with reference to the accompanying drawings, in which:

Figure 1 is a partially broken away, partially fragmentary view of the upper portion of a food serving cart having the preferred dry ice bunker mounted therein;

Figure 2 is a partially broken away perspective view of the preferred dry ice bunker;

Figure 3 is a sectional view taken on line 3—3 of Figure 2;

Figure 4 is a cross-sectional side view taken in a vertical plane through the centre of the cart of Figure 1;

Figure 5 is a fragmentary end view of the cart of Figure 1;

Figure 6 is a perspective view of a second embodiment of food service cart which has been partially broken away to illustrate a modified chilling apparatus;

Figure 7 is an exploded perspective view illustrating the various elements of the chilling apparatus of Figure 6;

Figure 8 is a fragmentary end view of the top portion of the cart of Figure 6 with the door removed;

Figure 9 is a horizontal sectional view through the cart of Figure 6 above a tray surface so as to illustrate the direction of air flow, the heated food containers having been omitted for clarity; and

Figure 10 is a side sectional view of the top of the cart of Figure 6 taken on the line 5—5 of Figure 9 with the dry ice pieces and the heated food containers removed for clarity and arrows added to show the circulation pattern for the chilled air.

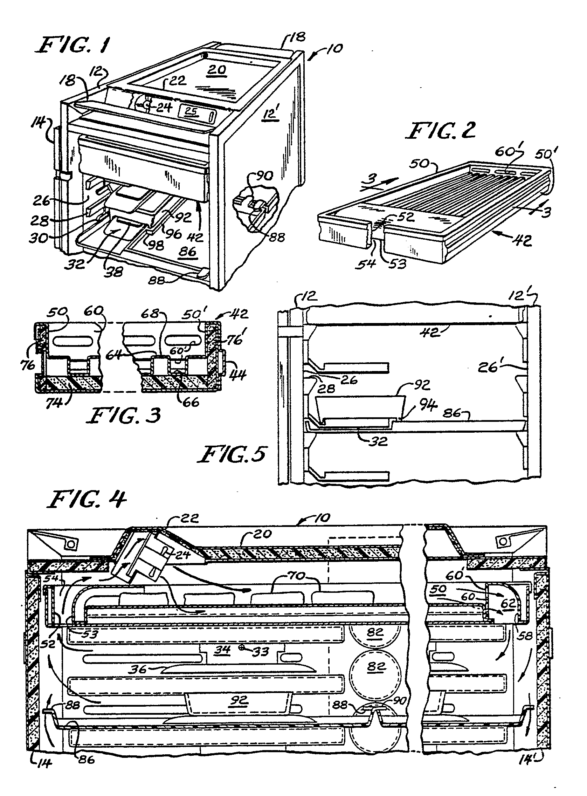

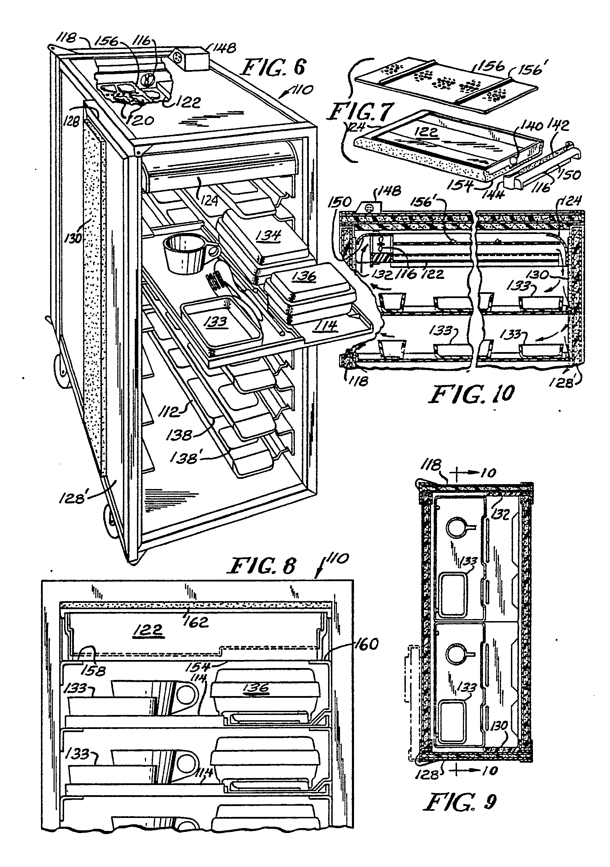

Referring to Figure 1, the upper portion of an airline food service cart is indicated generally at 10. The cart comprises an enclosed housing which includes side walls 12, 12' and doors 14, 14' at each end which are hinged to the side walls. The doors are hinged such that they can be positioned generally flush with the ends of the cart when closed and in contact with one of the side walls when open. A latch (not shown) is preferably provided at the top and bottom of each door while a magnet assembly (not shown) is attached to the outer side of wall 12 to retain the door against the side wall when the cart is being moved in an aircraft aisle. At each end of the cart, a conventional brake release member 18 is mounted. These members permit the cart to be moved when the member 18 is depressed, thus releasing brake pads (not shown) from frictional engagement with the floor. The top of the cart includes a dry sink portion 20 delimited at one end by an upwardly extending portion 22 which defines a housing for a circulating fan 24 and an electrical connector plug (not shown) which is recessed under a connector cover 25. The interior walls 26, 26' of the cart are preferably of thermoformed plastics sheet so as to include integral food tray supporting ledges 28 and strengthening ribs 30. The wall 26 has separate heater shelves 32 attached to it by means of a screw 33 (Figure 4) which passes through a vertical support member 34 of each shelf. The ends of each shelf 32 are tapered at 36 and have heater plate portions 38 in their top surfaces for a purpose to be hereinafter described.

Positioned on the uppermost tray ledge 28 in Figure 1 is a chiller bunker indicated generally at 42 which is shown more thoroughly in Figures 2 and 3. The bunker may be inserted from either end of the cart provided it is oriented in the correct direction relative to the cart. This correct orientation is ensured by a keying rib 44 positioned on one side of the bunker which cooperates with a complementary groove (not shown) formed in the interior wall 26'. The bunker 42 is preferably formed from a thermoformed plastics material such as ABS and includes hollow side walls 50, 50'. An inlet end wall 52 and an inlet end flow guide 53 cooperate to form an air inlet opening 54 through which air can pass upwardly to the circulating fan 24 (see Figure 4). The downstream end of the bunker includes an outlet end wall member 58 which cooperates with a slotted end plate member 60 having spaced slots 60' to form an outlet air opening 62 through which air is fed downwardly. The respective air spaces 54 and 62 also constitute finger-engageable recesses which permit the bunker 42 to be carried and easily inserted or removed from a cart. The inside bottom of the bunker comprises a corrugated, thermoformed plastics sheet 64 which is shown in Figure 3 as including a plurality of flat bottomed grooves 66 and interconnecting flat-topped ridges 68. The ridges 68 together provide a flat support surface for pieces 70 of dry ice which are placed within the bunker (Figure 4). The grooves 66 provide a very efficient flow path allowing air blown by the fan 24 to pass under the pieces 70. The arrangement is especially efficient since the $CO_2$ gas released from the dry ice is heavier than air and tends to move downwardly into the grooves. In order to prevent the very cold bunker 42 from over-chilling the trays mounted beneath it, a layer of thermal insulation 74 is located below the corrugated sheet 64. Additional insulation 76, 76' is located in the side walls of the bunker.

Figure 4 illustrates the flow path of air inside the cart. The circular members 82 in the centre of the cart are snap-in access port covers which permit easy servicing of the electrical connections to each of the individual heater shelves 32. Preferably, the cart 10 is sufficiently long to accommodate two food trays end-to-end. Since it is necessary for air to be able to flow upwardly along the left door 14 and downwardly along the right door 14', it is preferable that means be provided either in the cart or on the trays to ensure that the trays will not inadvertently be permitted to block the air path. The proper results can be achieved by moulding integral end tabs 88, 90 in offset relationship on the ends of each tray 86. This relationship assures the proper spacing of the trays from the doors 14, 14' and yet allows the trays to abut each other in the centre of the cart.

The food trays 86 are especially constructed to restrain hot food containers 92 from longitudinal movement relative to the tray as the tray is slid into the cart along the edges 48. During this movement, the appropriate heater shelf 32 passes under the container 92 and lifts it slightly to cause the heater plate 38 to contact the bottom of the container 92. As can be seen in Figures 1 and 5, the container has longitudinal runners 94 which are engaged by a tray guide 96 and a transverse abutment portion 98. The tray guide 96 is preferably a pair of spaced guides between which the runner 94 locates to prevent rotation of the container. Preferably, there is an abutment portion 98 to capture the runner 94 at each end, so the container is restrained as it moves with a tray either into or out of the cart.

As can be seen from the preceding description, the construction of the chiller bunker 42, with its grooves 66, greatly enhances the efficiency of heat transfer since the downwardly moving cold $CO_2$ gas can be readily picked up by the circulating air stream from the fan 24. The fan 24, by being positioned at an angle, not only helps direct air into the grooves 66 and under the dry ice pieces 70, but is well protected from damage by the careless use of high pressure steam or hot water hoses used to clean the cart. The bunker 42 requires only the vertical space of one food tray. The angled fan mounting requires little or no increase in the height of the cart compared to one having a fan mounted on the same level as the bunker since it is desirable for the cart to have the recessed dry sink 20 which requires the raised portion 22. A further advantage of a top-mounted fan is that it permits the bunker 42 to be loaded into the cart from whichever end is more convenient. A suitable mounting angle for the axis of the fan 24 is about 30° relative to the horizontal. This angle ensures that most of the air will be directed lengthwise of the bunker, but that some of it will also get directed under the dry ice. The entire bunker is very light in weight due to its being formed of thin plastics sheets which are bonded to each other by solvents, heat, or other conventional techniques.

Figure 6 is a perspective view illustrating the environment in which another embodiment of the invention is used. Although the cart 110 is different, the integral heater shelves 112, the food trays 114 and their operative relationship with the cart are substantially identical to the corresponding elements in the aforementioned EP—A—0046414. The cart 110 differs in that it has one or more small blowers 116 which draw in air moving vertically upwardly along the inside of one door 118 and blows it over a bed of dry ice pieces 120 which are positioned in a removable bunker 122. The chilled air is then deflected by a deflecting vane 124 along the inside surface 128' of the other door 128 which is of course closed during use. The bottom wall of the bunker is flat and unobstructed by vertical obstructions in the region adjacent the deflecting vane 124 since the $CO_2$ vapour from the dry ice is heavier than air and will of course flow more freely if there are no obstructions in its path. A vertical pad member 130 on the door 128 and a similar pad 132 on the door 118 are preferably provided to space the trays 114 from the doors, thus ensuring the air and $CO_2$ vapour can circulate vertically along the doors and over cold food containers 133 on the trays. The pads 130, 132 also serve to prevent vertical air flow adjacent the "hot" sides of the trays 114 and thus reduce the amount of heat lost by convection from heated containers 134, 136 which contact heater plates 138, 138' carried by the heater shelves 112.

The tray-like bunker member 122 is shown more clearly in Figure 7 in a position rotated 180° from its Figure 6 position. The bunker 122 includes a moulded plastics body which has a circular aperture 140 at one end adapted to mate with the blower 116. The blower 116 is covered by insulation 142 and mounted in a support frame 144 which is firmly attached to the inside walls of the cart. Electrical lead wires (not shown) extend from the blower to the same junction box 148 which provides power to the heater plates. A curved vane member 150 is affixed to the support frame 144 and serves as an inlet duct to direct air to the blower as seen in Figure 10. The bottom surface of the bunker 122 has a raised portion on the side thereof which is adapted to overlie the uppermost heater shelf 112. The bottom and sides of the bunker 122 are coated with a layer of foam insulation 154 to prevent excessive chilling of the tray 114 which is located directly under the bunker 122. The aforementioned raised portion of the bunker permits the insulation to be much thicker over the hot side of the tray. To maximize the amount of chilling provided by the bunker 122, the dry ice 120 is preferably broken into pieces and a thin, perforated plastic spacer plate 156 is placed over a bottom layer of dry ice and is itself covered with dry ice. To provide some rigidity to the thin plate 156, one or more strengthening ribs 156' may be provided.

Figure 8 illustrates the compactness of the bunker 122 which slides into the cart 110 on supporting ledges 158, 160 and, even with additional insulation 162 added to the inside of the top wall of the cart, takes up no more space than a loaded tray 114. If desired, the cart 110 can be provided with a selectively closable aperture in one door to permit the cart to be connected to a mechanical refrigeration unit when desired. Thus, the same cart could be used in an aircraft with mechanical refrigeration by not placing dry ice in the bunker.

Figures 9 and 10 illustrate the flow of chilled air through the cart and across the cold food containers 133. The blower 116 draws air up along the inside of the door 118 and forces it across the dry ice (not shown) which is placed on the bottom of the bunker 122 and on the spacer shelf 156. The deflector 124 directs the chilled air downwardly along the inside wall 128' of the cart door 128 from where it passes over the trays to the door 118. The circulation is assisted by the fact that the chilled air will drop and the warmed air will rise.

**Claims**

1. A food service cart (10) having opposed end walls (14, 14'; 118, 128), at least one of which is a door, and a plurality of sets of opposed ledges (28) on its side walls (12, 12') which are adapted to receive the opposed edges of a plurality of meal trays (114), said food service cart (10) including a tray-like bunker (42, 122) adapted to be slidably located in an upper part of the food service cart (10), said bunker (42, 122) being adapted to receive pieces of dry ice or other cooling material (70, 120), said bunker (42, 122) having a chilled air discharge opening (62) at a first or downstream end thereof, said discharge opening (62) being positioned so as to receive air which has passed over said cooling material (70, 120), said discharge opening being adapted to cooperate with a first end wall (14', 128) of said cart (10) to direct air downwardly over said first end wall (14', 128) which has previously been drawn upwardly over the opposite end wall (14, 118) of the cart (10), characterised in that at least one blower (24, 116) for circulating air within the cart (10) past said trays (114) and said cooling material (70, 120), is located closely adjacent to the opposite end of the bunker (42, 122) to blow air around said cooling material and into the discharge opening, and in that spacing means (88, 90; 130, 132) is provided for spacing the trays (114) from at least portions of the opposed end walls (14, 14'; 118, 128) to prevent the trays (114) from blocking the vertical flow of chilled air passing along portions of the opposed end walls (14, 14'; 118, 128) which are adjacent to the ends of the trays (114).

2. A food service cart in accordance with claim 1, characterised in that said bunker (42, 122) has an inlet opening (54) immediately adjacent its second or upstream opposite end for permitting air moving upwardly along said opposite end wall (14, 118) of the cart (10) to reach a blower (24, 116) mounted in the cart (10) adjacent to said bunker (42, 122).

3. A food service cart according to claim 2, characterised in that said blower (24) is positioned above said bunker (42) to direct air at an angle to the horizontal both downwardly into said bunker (42) and along its length towards said discharge opening (62).

4. A food service cart according to any preceding claim, in which the inside bottom surface of said bunker (42) is periodically interrupted by a plurality of spaced grooves (66) which extend in directions parallel to the side walls (50, 50') of the bunker (42), characterized in that said discharge opening (62) is positioned so as to receive air which is blown over and around said cooling material (70) as well as air which is blown through said grooves (66) under said cooling material (70).

5. A food service cart according to claim 4, characterised in that said inside bottom surface of said bunker (42) is formed by a thermoformed plastics sheet (64) which has a corrugated cross-sectional configuration in a plane transverse to the direction of air flow across it.

6. A food service cart according to any preceding claim, characterised in that said bunker (42, 122) has a curved deflector portion (58, 124) at its discharge opening (62) which is adapted to collect chilled air being blown horizontally across the cooling material (70, 120) in the bunker (42, 122) and direct it downwardly.

7. A food service cart according any preceding claim, characterised in that said bunker (42) includes a slotted end plate member (60) at the downstream end for restraining the movement of cooling material (70) placed in the bunker (42) while permitting air moving under or over said cooling material (70) to reach said discharge opening (62) without being impeded.

8. A food service cart according to any preceding claim, characterised in that the bunker (42, 122) is thermally insulated at least on its underneath surface, said insulation being substantially thicker along the portion of the bunker (122) which is adapted to overlie containers (136) on the meal trays (114) which are to be heated, than along the portion which overlies the containers (133) to be chilled.

9. A food service cart as claimed in any preceding claim, characterised in that the air inlet opening (54) and the air discharge opening (62) of the bunker (42) are of sufficient size to accommodate the fingers of a person desiring to carry the bunker (42) or to pull it out of the cart (10).

10. Apparatus for chilling a plurality of food trays (86) positioned on a plurality of ledges (28) on the interior side walls (12, 12') of an enclosed portion of a food service cart (10), said apparatus including a reservoir (42) for cooling material (70) in the form of a tray-like bunker (42) removably insertable onto a pair of ledges (28) located immediately above the ledges supporting the food trays (86), said bunker having an inside bottom surface periodically interrupted by a plurality of spaced grooves (66), characterised in that a blower for circulating air upwardly along a first door (14), past.the cooling material (70) downwardly along a second door (14') and over said trays (86), is mounted above an upstream end of said bunker (42) in the upper wall of said cart (10) which defines the top of said enclosed portion, said bunker (42) being formed and sized so as to direct air flowing upwardly along said first door (14) of the cart (10) to said blower (24) and to direct air blown along said bunker (42) by said blower (24) through a discharge opening (62) in said bunker (42) and downwardly along said second door (14') of the cart (10), in that said food trays (86) are positioned end to end in the cart (10) and have raised, laterally offset, longitudinally extending tab portions (88, 90) at each end thereof, said tab portions (88, 90) permitting a pair of longitudinally aligned trays (86) to closely abut each other at the center of the cart (10) but serving to space each of the trays (86) from the adjacent door (14, 14') of the cart (10), thereby maintaining an open air flow path along the inside surface of the doors (14, 14'), and in that part of the air flowing in said air flow path has passed through said grooves (66) below the cooling material (70).

**Patentansprüche**

1. Ein Speiseservierwagen (10) mit gegenüberliegenden Stirnwänden (14, 14'; 118, 128), von denen zumindest eine als Tür ausgeführt ist, und einer Vielzahl von gegenüberliegenden Anschlägen (28) an seinen Seitenwänden (12, 12'), die so ausgeführt sind, daß sie die gegenüberliegenden Kanten einer Vielzahl von Speisetabletts (114) aufnehmen können, wobei der genannte Speiseservierwagen (10) einen tablettförmigen Einsatz (42, 122) umfaßt, der so ausgeführt ist, daß er in einen oberen Teil des Speiseservierwagens (10) eingeschoben werden kann, wobei der genannte Einsatz (42, 122) so ausgeführt ist, daß er Trockeneisstücke oder ein anderes Kühlmittel (70, 120, aufnehmen kann, und wobei der genannte Einsatz (42, 122) eine Kühlluftaustrittsöffnung (62) an seinem ersten oder hinteren Ende aufweist, die genannte Austrittsöffnung (62) so angeordnet ist, daß sie die Luft aufnehmen kann, die über das genannte Kühlmittel (70, 120) geströmt ist, und die genannte Austrittsöffnung so ausgeführt ist, daß sie mit einer ersten Stirnwand (14', 128) des genannten Wagens (10) so zusammenwirken kann, daß die Luft nach unten über die genannte erste Stirnwand (14', 128) geführt wird, die vorher nach oben über die gegenüberliegende Stirnwand (14, 118) des Wagens (10) geströmt ist, dadurch gekennzeichnet, daß zumindest ein Gebläse (24, 116), das der Umwälzung der Luft innerhalb des Wagens (10) an den genannten Tabletts (114) und dem genannten Kühlmaterial (70, 120) entlang dient, in unmittelbarer Nähe zum gegenüberliegenden Ende des Einsatzes (42, 122) angeordnet ist, um die Luft um das genannte Kühlmaterial herum und in die Austrittsöffnung zu blasen, und dadurch gekennzeichnet, daß Abstandsvorrichtungen (88, 90; 130, 132) vorgesehen sind, um die Tabletts (114) zumindest von Teilen der gegenüberliegenden Stirnwände (14, 14'; 118, 128) entfernt zu halten, um so zu verhindern, daß die Tabletts (114) den vertikalen Strom gekühlter Luft daran hindern, an Teilen der gegenüberliegenden Stirnwände (14, 14'; 118, 128) entlang zu strömen, die in der Nähe der Enden der Tabletts (114) angeordnet sind.

2. Ein Speiseservierwagen gemäß Anspruch 1, dadurch gekennzeichnet, daß der genannte Einsatz (42, 122) eine Eintrittsöffnung (54) aufweist, die in unmittelbarer Nähe seines zweiten oder vorderen gegenüberliegenden Endes angeordnet ist, damit die Luft nach oben an der genannten gegenüberliegenden Stirnwand (14, 118) des Wagens (10) entlang strömen kann, um zu einem Gebläse (24, 116) zu gelangen, das im Wagen (10) in der Nähe des genannten Einsatzes (42, 122) vorgesehen ist.

3. Ein Speiseservierwagen gemäß Anspruch 2, dadurch gekennzeichnet, daß das genannte Gebläse (24) über dem genannten Einsatz (42) angeordnet ist, um die Luft in einem Winkel zur Horizontalen sowohl nach unten in den genannten Einsatz (42) als auch über dessen Länge zur genannten Austrittsöffnung (62) hin zu führen.

4. Ein Speiseservierwagen gemäß irgendeinem der vorstehenden Ansprüche, wobei die innenliegende Bodenfläche des genannten Einsatzes (42) in regelmäßigen Abständen eine Vielzahl von Nuten (66) aufweist, die parallel zu den Seitenwänden (50, 50') des Einsatzes (42) verlaufen, dadurch gekennzeichnet, daß die genannte Austrittsöffnung (62) so angeordnet ist, daß sie die Luft, die über das genannte Kühlmaterial (70) und um dieses Material herum geführt wird, sowie die Luft aufnehmen kann, die durch die genannten Nuten (66) unterhalb des genannten Kühlmaterials (70) geführt wird.

5. Ein Speiseservierwagen gemäß Anspruch 4, dadurch gekennzeichnet, daß die genannte innenliegende Bodenfläche des genannten Einsatzes (42) aus einer warmgeformten Kunststoffplatte (64) besteht, die ein gewellte Querschittsausführung in einer Ebene quer zur Richtung des darüber strömenden Luftstroms aufweist.

6. Ein Speiseservierwagen, gemäß irgendeinem der vorstehenden Ansprüche, dadurch gekennzeichnet, daß der genannte Einsatz (42, 122) einen gebogenen Deflektorabschnitt (58, 124) an seiner Austrittsöffnung (62) aufweist, der so ausgeführt ist, daß er die gekühlte Luft, die horizontal über das Kühlmaterial (70, 120) im Einsatz (42, 122) geführt wird, auffangen und sie nach unten ablenken kann.

7. Ein Speiseservierwagen gemäß irgendeinem der vorstehenden Ansprüche, dadurch gekennzeichnet, daß der genannte Einsatz (42) eine geschlitzte Endplatte (60) am hinteren Ende umfaßt, um die Bewegung des im Einsatz (42) befindlichen Kühlmaterials (70) einzuschränken, andererseits jedoch zu ermöglichen, daß die Luft, die sich unter- oder oberhalb des genannten Kühlmaterials (70) bewegt, die genannte Austrittsöffnung (62) ohne Behinderung erreichen kann.

8. Ein Speiseservierwagen gemäß irgendeinem der vorstehenden Ansprüche, dadurch gekennzeichnet, daß der Einsatz (42, 122) zumindest an seiner unteren Fläche wärmeisoliert ist, wobei die genannte Isolierung entlang des Teils des Einsatzes (122), der so ausgeführt ist, daß er über den Behältern (136) auf den zu wärmenden Speisetabletts (114) liegt, wesentlichen dicker als entlangs des Teils ist, der über den zu kühlenden Behältern (133) liegt.

9. Ein Speiseservierwagen gemäß irgendeinem der vorstehenden Ansprüche, dadurch gekennzeichnet, daß die Lufteintrittsöffnung (54) und die Luftaustrittsöffnung (62) des Einsatzes (42) ausreichend groß sind, um die Finger einer Person aufnehmen zu können, die den Einsatz (42) tragen oder ihn aus dem Wagen (10) entnehmen möchte.

10. Ein Gerät zum Kühlen einer Vielzahl von Speisetabletts (86), die auf einer Vielzahl von Anschlägen (28) an den inneren Seitenwänden (12, 12') eines abgeschlossenen Teils eines Speiseservierwagens (10), ruhen, wobei das genannte Gerät ein Reservoir (42) für das Kühlmaterial (70) in Form eines tablettförmigen Einsatzes (42) umfaßt, der so auf ein Paar Anschläge (28) gesetzt werden kann, daß er sich wieder herausnehmen läßt, wobei diese Anschläge direkt über denjenigen Anschlägen. angeordnet sind, auf denen die Speisetabletts (86) ruhen, und wobei der genannte Einsatz eine innenliegende Bodenfläche aufweist, die in regelmäßigen Abständen eine Vielzahl von Nuten (66) besitzt, dadurch gekennzeichnet, daß ein Gebläse, das die Luft nach oben an einer ersten Tür (14) enlang über das Kühlmaterial (17) nach unten an einer zweiten Tür (14') entlang und über die genannten Tabletts (86) umwälzt, über einem vorderen Ende des genannten Einsatzes (42) in der oberen Wand des genannten Wagens (10) montiert ist, der die Oberkante des genannten abgeschlossenen Teils festlegt, wobei der genannte Einsatz (42) so geformt und in seinen Abmessungen so ausgeführt ist, daß die Luft nach oben an der genannten ersten Tür (14) des Wagens (10) entlang zum genannten Gebläse (24) strömt und die Luft am genannten Einsatz (42) entlang vom genannten Gebläse (24) durch eine Austrittsöffnung (62) im genannten Einsatz (42) und dann nach unten an der genannten zweiten Tür (14') des Wagens (10) entlang geführt wird, und dadurch gekennzeichnet, daß die genannten Speisetabletts (86) mit ihren Enden zueinander im Wagen (10) angeordnet sind und erhabene, seitlich vorstehenden und sich über die Längsseite erstreckende Vorsprungabschnitte (88, 90) an jedem ihrer Enden aufweisen, wobei die genannten Vorsprungabschnitte (88, 90) es ermöglichen, daß ein Paar in Längsrichtung ausgerichteter Tabletts (86) in der Mitte des Wagens (10) eng zueinander angeordnet werden kann, andererseits jedoch für einen Abstand zwischen jedem der Tabletts (86) und der benachbarten Tür (14, 14') des Wagens (10) sorgt, so daß ein freier Luftströmungsweg an den Innenflächen der Türen (14, 14') entlang aufrechterhalten bleibt, und dadurch gekennzeichnet, daß ein Teil der Luft, die durch den genannten Luftströmungsweg geströmt ist, über die genannten Nuten (66) unterhalb des Kühlmaterials (70) geführt wird.

**Revendications**

1. Un chariot (10) de service de nourriture comportant des parois d'extrémité opposées (14, 14'; 118, 128) dont une au moins est une porte, et une pluralité de séries de moulures (28) opposées sur ses parios latérales (12, 12'), qui sont agencées pour recevoir les bords opposés d'une pluralité de plateaux-repas (114), le dit chariot (10) de service de nourriture comprenant un compartiment (42, 122) en forme de plateau agencé pour être glissé dans une portion supérieure du chariot (10) de service de nourriture, le dit compartiment (42, 122) étant agencé pour recevoir des morceaux de glace sèche ou d'un autre matériau réfrigérant (70, 120), le dit compartiment (42, 122) présentant une ouverture (62) de sortie de l'air glacé à une première de ses extrémités ou extrémité aval, la dite ouverture (62) de sortie étant positionnée de façon à recevoir l'air qui a circulé sur le dit matériau réfrigérant (70, 120), la dite ouverture de sortie étant disposée de façon à coopérer avec une première paroi d'extrémité (14', 128) du dit chariot (10) pour diriger vers le bas, le long de la dite première paroi d'extrémité (14', 128) l'air qui a préalablement été aspiré vers le haut le long de la paroi d'extrémité opposée (14, 118) du chariot (10), caractérisé en ce qu'au moins une soufflerie (24, 116) pour faire circuler de l'air à l'intérieur du chariot (10) sur les dits plateaux (114) et sur le dit matériau réfrigérant (70, 120) est disposée à proximité immédiate de l'extrémité opposée du compartiment (42, 122) pour souffler de l'air autour du dit matériau réfrigérant et dans l'ouverture de sortie, et en ce qu'il est prévu des moyens d'écartement (88, 90; 130, 132) pour écarter les plateaux (114) d'au moins des parties des parois d'extrémité opposées (14, 14'; 118, 128) pour empêcher que les plateaux (114) fassent obstacle à l'écoulement vertical de l'air glacé circulant le long des parties des parois d'extrémité opposées (14, 14'; 118, 128) qui sont voisines des extrémités des plateaux (114).

2. Un chariot de service de nourriture suivant la revendication 1, caractérisé en ce que le dit compartiment (42, 122) présente une ouverture d'entrée (54) immédiatement voisine de sa seconde extrémité opposée, ou extrémité amont, pour permettre à l'air circulant vers le haut le long de la dite paroi d'extrémité opposée (14, 118) du chariot (10) d'atteindre une soufflerie (24, 116) montée dans le chariot (10) au voisinage du dit compartiment (42, 122).

3. Un chariot de service de nourriture suivant la revendication 2, caractérisé en ce que la dite soufflerie (24) est positionnée au-dessus du dit compartiment (42) afin de diriger l'air sous un certain angle par rapport à l'horizontale, à la fois vers le bas dans le dit compartiment (42) et le long de sa longueur en direction de la dite ouverture de sortie (62).

4. Un chariot de service de nourriture suivant l'une ou l'autre des revendications précédentes, dans lequel la surface intérieure du fond du dit compartiment (42) est périodiquement interrompue par une pluralité de rainures (66) espacées qui s'étendent dans des directions parallèles aux parois latérales (50, 50') du compartiment (42), caractérisé en ce que la dite ouverture de sortie (62) est disposée de façon à recevoir l'air qui est soufflé sur et autour du dit matériau réfrigérant (70) aussi bien que l'air qui est soufflé à travers les dites rainures (66) situées sous le dit matériau réfrigérant (70).

5. Un chariot de service de nourriture suivant la revendication 4, caractérisé en ce que la dite surface intérieure du fond du dit compartiment (42) est constituée d'une feuille (64) de matière plastique thermoformée qui présente un profil transversal ondulé vu dans un plan perpendiculaire à la direction de circulation de l'air dans ce profil.

6. Un chariot de service de nourriture suivant l'une ou l'autre des revendications précédentes, caractérisé en ce que le dit compartiment (42, 122) comporte, à son ouverture de sortie (62), un organe déflecteur incurvé (58, 124) qui est agencé de façon à collecter l'air glacé soufflé horizontalement sur le matériau réfrigérant (70, 120) se trouvant dans le compartiment (42, 122) et à le diriger vers le bas.

7. Un chariot de service de nourriture suivant l'une ou l'autre des revendications précédentes, caractérisé en ce que le dit compartiment (42) comporte à son extrémité aval une plaque d'extrémité (60) à encoches pour limiter le mouvement du matériau réfrigérant (70) placé dans le compartiment (42) tout en permettant à l'air circulant en dessous ou au-dessus du dit matériau réfrigérant (70) d'atteindre la dite ouverture (62) de sortie sans rencontrer d'obstacles.

8. Un chariot de service de nourriture suivant l'une ou l'autre des revendications précédentes, caractérisé en ce que le compartiment (42, 122) est pourvu d'une isolation thermique au moins sur sa face inférieure, la dite isolation étant substantiellement plus épaisse le long de la partie du compartiment (122) qui est agencée de façon à surplomber les récipients (136) se trouvant sur les plateaux-repas (114) et qui doivent être chauffés, que le long de la partie qui surplombe les récipients (133) à refroidir.

9. Un chariot de service de nourriture suivant l'une ou l'autre des revendications précédentes, caractérisé en ce que l'ouverture (54) d'entrée d'air et l'ouverture (62) de sortie d'air du compartiment (42) ont une dimension suffisante pour qu'une personne désirant porter le compartiment (42) ou l'extraire du chariot (10) puisse y introduire les doigts.

10. Appareil pour réfrigérer une pluralité de plateaux-repas (86) positionnés sur une pluralité de moulures (28) formées sur les parois latérales intérieures (12, 12') d'une partie fermée d'un chariot (10) de service de nourriture, le dit appareil comprenant un réservoir (42) pour un matériau réfrigérant (70), sous forme d'un compartiment (42) en forme de plateau introductible de façon amovible sur une paire de moulures (28) situées immédiatement au-dessus des moulures supportant les plateaux-repas (86), le dit compartiment présentant un fond dont la surface intérieure est périodiquement interrompue par une pluralité de rainures (66) espacées, caractérisé en ce qu'une soufflerie pour faire circuler de l'air vers le haut le long d'une première porte (14), sur le dit matériau réfrigérant (70), vers le bas le long d'une seconde porte (14') et au-dessus des dits plateaux (86), est montée au-dessus d'une extrémité amont du dit compartiment (42) dans la paroi supérieure du dit chariot (10) qui définit le haut de la dite partie fermée, le dit compartiment (42) étant formé et dimensionné de façon à diriger l'air qui s'écoule vers le haut le long de la dite première porte (14) du chariot (10) vers la dite soufflerie (24) et à diriger l'air soufflé le long du dit compartiment (42) par la dite soufflerie (24) à travers une ouverture de sortie (62) dans le dit compartiment (42) et vers le bas le long de la dite seconde porte (14') du chariot (10), en ce que les dits plateaux-repas (86) sont placés bout à bout dans le chariot (10) et présentent à chacune de leurs extrémités des pattes (88, 90) surélevées, latéralement décalées et se prolongeant en direction longitudinale, les dites pattes (88, 90) permettant à une paire de plateaux (86) alignés dans le sens longitudinal de se placer bout à bout au centre du chariot (10) mais servant à écarter chacun des plateaux (86) de la porte du chariot (10) qui leur est voisine, maintenant ainsi un passage ouvert pour la circulation de l'air le long de la face intérieure des portes (14, 14'), et en ce qu'une partie de l'air circulant dans les dits passages est passé par les dites rainures (66) situées sous le matériau réfrigérant (70).

FIG. 1

FIG. 2

FIG. 3

FIG. 5

FIG. 4

FIG. 6

FIG. 7

FIG. 10

FIG. 8

FIG. 9